(19) Europäisches Patentamt / European Patent Office / Office européen des brevets

(11) **EP 2 770 480 A1**

(12) **DEMANDE DE BREVET EUROPEEN**

(43) Date de publication:
**27.08.2014 Bulletin 2014/35**

(51) Int Cl.:
***G06T 11/00*** *(2006.01)*

(21) Numéro de dépôt: **14155708.2**

(22) Date de dépôt: **19.02.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **20.02.2013 FR 1351442**

(71) Demandeur: **Commissariat à l'Énergie Atomique et aux Énergies Alternatives
75015 Paris (FR)**

(72) Inventeurs:
• **Haberfehlner, Georg
38000 GRENOBLE (FR)**
• **Bleuet, Pierre
38180 SEYSSINS (FR)**

(74) Mandataire: **Ilgart, Jean-Christophe
BREVALEX
95, rue d'Amsterdam
75378 Paris Cedex 8 (FR)**

(54) **Procédé d'imagerie en trois dimensions à résolution ameliorée**

(57) Procédé de thomographie en trois dimensions d'un échantillon mettant en oeuvre une source émettant un faisceau de rayons X ou une source émettant un faisceau d'électrons et au moins un détecteur, ledit procédé d'imagerie comportant les étapes :
a) acquisition d'au moins trois séries de projections de l'échantillon à différents angles d'inclinaison, chaque série de projections étant réalisée en modifiant l'angle d'inclinaison de l'échantillon par rapport à l'axe du faisceau autour d'un axe d'inclinaison distinct de ceux des autres séries, les trois axes d'inclinaison étant non coplanaires,
b) une étape d'alignement des projections,
c) une étape de reconstruction.

EP 2 770 480 A1

**Description**

**DOMAINE TECHNIQUE ET ART ANTÉRIEUR**

La présente invention se rapporte à un procédé d'imagerie par de tomographie en trois dimensions offrant une résolution améliorée.

Les sciences des matériaux et les sciences du vivant requièrent des techniques de caractérisation fournissant des images en trois dimensions des objets. La technique d'imagerie par tomographie permet d'obtenir ces images sur une échelle de résolution étendue, atteignant environ 100nm en tomographie rayons X et progressant du nanomètre à l'Angström en tomographie électronique. La tomographie consiste à réaliser plusieurs projections d'un objet sous différents angles de vue, soit en faisant tourner l'objet autour d'un axe, soit en faisant tourner le système source/détecteur par rapport à l'objet.

Afin d'obtenir une bonne résolution dans les trois dimensions de l'espace, un grand nombre de projections est requis. Mais pour des raisons pratiques le nombre de projections est limité. Le nombre de projections est également limité pour limiter les dégâts dus aux radiations, actuellement en tomographie électronique, c'est le nombre de projections qui limite la résolution spatiale atteignable.

Il existe également une technique de tomographie utilisant deux axes de rotation ou plus situés dans le même plan. Par exemple une telle technique est décrite dans le document C. Messaoudi, N.G. de Loubresse, T. Boudier, P. Dupuis-Williams, S. Marco, Multiple-axis tomography: applications to basal bodies from Paramecium tetraurelia, Biology of the Cell, 98 (2006) 415-425. Une telle technique permet de réduire l'effet de "l'angle mort", qui peut apparaître lorsque l'échantillon à imager ne peut pivoter sur 180°.

**EXPOSÉ DE L'INVENTION**

C'est par conséquent un but de la présente invention d'offrir un procédé d'imagerie par tomographie offrant une résolution améliorée.

Le but précédemment énoncé est atteint par un procédé d'imagerie en trois dimensions comportant l'étape d'acquisition de projections autour d'au moins trois axes de pivotement non coplanaires, l'étape d'alignement des projections et l'étape de reconstruction des images.

De préférence les trois axes sont orthogonaux entre eux ou sensiblement orthogonaux. Une telle orientation permet d'optimiser la couverture angulaire globale, la gestion de trois axes orthogonaux est simplifiée par rapport à celle d'angles quelconques et enfin ce choix d'orientation des axes peut être lié à la géométrie de l'échantillon.

Dans un exemple de réalisation, c'est le support portant l'échantillon qui pivote autour d'un axe de rotation, l'orientation de l'échantillon par rapport au support étant modifiée au cours de l'étape d'acquisition pour changer l'angle de vue.

Dans un autre exemple de réalisation, c'est l'ensemble source-détecteur qui se déplace autour de l'échantillon.

Grâce à l'invention, il est possible d'améliorer la résolution et de s'approcher d'une résolution isotrope en 3D sans augmenter le nombre de projections. En effet en considérant n projections, n/3 projections sont par exemple prises autour de chaque axes de rotation non coplanaires. Dans le cas où les axes sont orthogonaux entre eux, l'échantillonnage le long de ces trois axes est homogène et l'espace de Fourier en trois dimensions est échantillonné de manière plus efficace par rapport aux techniques utilisant un seul axe de rotation ou alors plusieurs axes de pivotement coplanaires.

La présente invention a alors pour objet un procédé d'imagerie en trois dimensions d'un échantillon mettant en oeuvre une source émettant un faisceau de rayons X ou une source émettant un faisceau d'électrons et au moins un détecteur, ledit procédé d'imagerie comportant les étapes :

> a) acquisition d'au moins trois séries de projections de l'échantillon à différents angles d'inclinaison, chaque série de projections étant réalisée en modifiant l'angle d'inclinaison de l'échantillon par rapport à l'axe du faisceau autour d'un axe d'inclinaison, distinct de ceux des autres séries, les trois axes d'inclinaison étant non coplanaires,
> b) une étape d'alignement des projections,
> c) une étape de reconstruction.

De préférence, les trois axes d'inclinaison sont orthogonaux entre eux.

L'étape b) d'alignement est réalisée avantageusement par corrélation croisée et/ou en mettant en oeuvre des marqueurs.

De manière avantageuse, l'étape de reconstruction met en oeuvre une technique de reconstruction itérative simultanée.

Lors de l'étape a), l'échantillon est par exemple déplacé par rapport au faisceau fixe. L'échantillon est alors par exemple solidarisé à un support orientable par rapport à un porte-échantillon, ledit support orientable étant apte à pivoter autour d'un axe orthogonal à l'axe du faisceau.

Par exemple, afin de modifier au moins un axe d'inclinaison, l'orientation de l'échantillon est modifiée par rapport au support orientable. La modification de l'orientation de l'échantillon par rapport au support orientable se fait avantageusement par un système à sonde ionique focalisée.

Par exemple, pour modifier l'orientation de l'échantillon par rapport au support orientable, un manipulateur peut être solidarisé à l'échantillon par apport de matière, l'échantillon peut ensuite être désolidarisé du support orientable par découpe de l'échantillon dans une zone située entre le support orientable et la zone de fixation au manipulateur au moyen de la sonde ionique focalisée, l'orientation de l'échantillon peut ensuite être modifiée en manipulant le manipulateur, l'échantillon peut ensuite être solidarisé sur un support orientable par rapport de matière et le manipulateur peut être désolidarisé de l'échantillon.

## BRÈVE DESCRIPTION DES DESSINS

La présente invention sera mieux comprise à l'aide de la description qui va suivre et des dessins en annexes, sur lesquels :

- la figure 1 est une représentation schématique d'un dispositif d'imagerie en trois dimensions apte à mettre en oeuvre le procédé d'imagerie selon l'invention,
- la figure 2A est une représentation schématique d'un porte-échantillon pouvant être utilisée dans le dispositif de tomographie de la figure 1,
- la figure 2B est une vue de détail de la figure 2A au niveau de l'échantillon,
- la figure 2C est une vue du porte-échantillon de la figure 2A, dans lequel le support orientable est orienté à 90° par rapport sa position sur la figure 2A,
- la figure 2D est une vue du porte-échantillon de la figure 2A, dans lequel un support orientable a la même orientation que le support orientable de la figure 2B, l'échantillon ayant cependant une orientation distincte de celle de la figure 2C,
- la figure 2E est une vue d'un support orientable selon un autre exemple de réalisation pouvant être utilisé dans le procédé d'imagerie,
- les figures 3A à 3I sont des représentations schématiques d'étapes de modification de l'orientation d'un échantillon par rapport à son support dans un système FIB pouvant être mises en oeuvre entre l'étape 2C et l'étape 2D,
- les figures 4A à 4C sont des représentations schématiques de l'échantillon dans ses différentes orientations d'acquisition selon l'invention,
- la figure 5 est un organigramme de l'étape d'alignement du procédé d'imagerie,
- la figure 6 est une représentation schématique d'un repère utilisé lors de l'étape d'alignement,
- la figure 7 est un organigramme de l'étape de reconstruction du procédé d'imagerie,
- les figures 8A et 8B représentent une image d'une structure zinc-blende et son image reconstruite obtenue grâce au procédé selon l'invention respectivement,
- les figures 8C et 8D représentent des images reconstruites du structure zinc-blende de la figure 8A obtenues respectivement par des procédés d'imagerie utilisant un et deux axes d'inclinaison de l'état de la technique,
- les figures 9A et 9B sont des représentations de trois axes d'inclinaison et cinq axes d'inclinaison pouvant servir à l'acquisition des projections pour le procédé d'imagerie selon l'invention.

## EXPOSÉ DÉTAILLÉ DE MODES DE RÉALISATION PARTICULIERS

La présente invention porte à la fois sur la tomographie X et la tomographie électronique, l'une ou l'autre étant choisie en fonction de la taille de l'échantillon à imager.

Le procédé d'imagerie par tomographie en trois dimensions selon l'invention comporte les étapes suivantes :

a) une étape d'acquisition des projections autour d'au moins trois axes non coplanaires X, Y, Z,
b) une étape d'alignement des projections,
c) une étape de reconstruction des images.

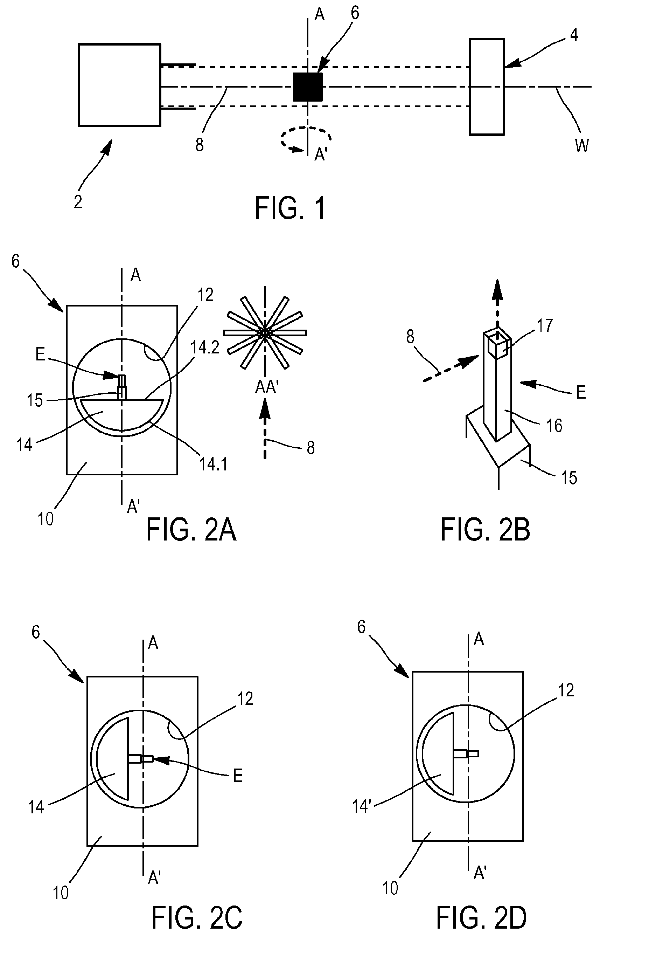

Dans l'exemple qui va être décrit les trois axes x, y, z sont représentés orthogonaux, mais l'angle entre les axe peut être légèrement inférieur ou supérieur à 90°. Le procédé d'imagerie peut être mis en oeuvre au moyen d'un système S d'imagerie par tomographie représenté schématiquement sur la figure 1.

Dans l'exemple qui va être décrit, c'est l'échantillon qui est pivoté par rapport à la source et au détecteur. Dans un autre exemple, la source et le détecteur pourraient être mobiles et l'échantillon fixe.

Sur la figure 1, on peut voir représenté schématiquement un dispositif de tomographie comportant une source de rayons X ou d'électrons 2 d'axe W, un détecteur 4 et un porte-échantillon 6 disposé entre la source 2 et le détecteur de sorte que l'échantillon soit situé sur le trajet du faisceau 8 émis par la source 2. Le faisceau 8 est symbolisé par un trait en pointillé.

Dans le cas d'une source d'électrons, les détecteurs sont du type à transmission tels que ceux utilisés en microscopie électronique à transmission (TEM : Transmission electron microscopy) ou STEM (Scanning Transmission electron microscopy). Dans le cas d'une source de rayons X, les détecteurs utilisés sont ceux conventionnellement utilisés en radiographie X et tomographie X.

Le porte-échantillon 6 est tel qu'il est apte à pivoter autour d'un axe désigné A-A' perpendiculaire à la direction du faisceau.

Sur la figure 2A, on peut voir un exemple de porte-échantillon 6 apte à faire pivoter l'échantillon autour d'un seul axe.

Le porte-échantillon 6 comporte un support mobile 10 muni d'un logement circulaire 12, ce support mobile est mobile en rotation autour d'un axe A-A', l'axe A-A' étant vertical dans la représentation de la figure 2A. L'axe de rotation du support mobile 10 est perpendiculaire à la direction du faisceau.

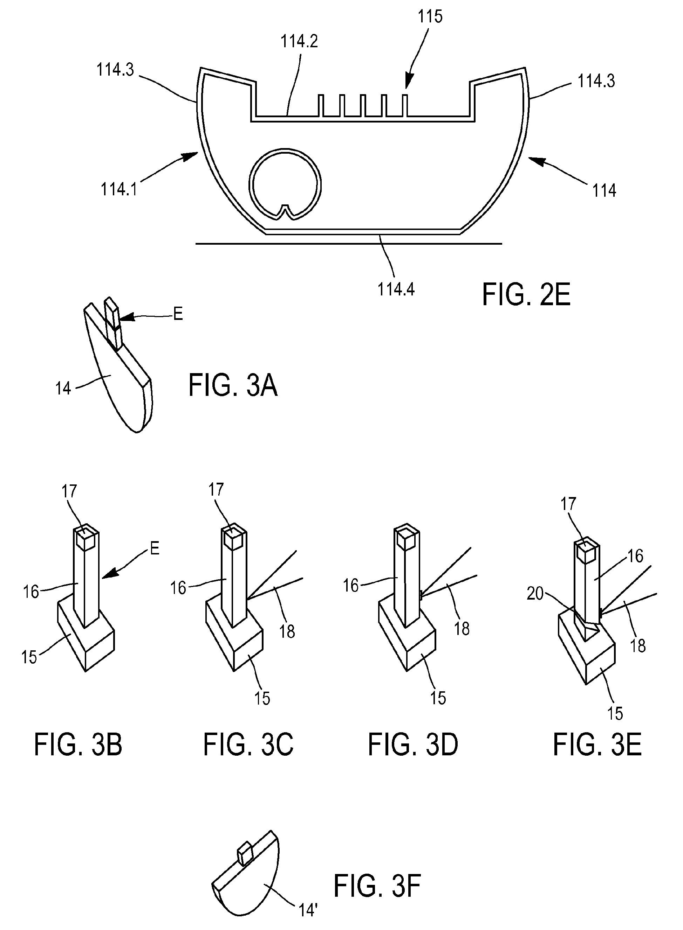

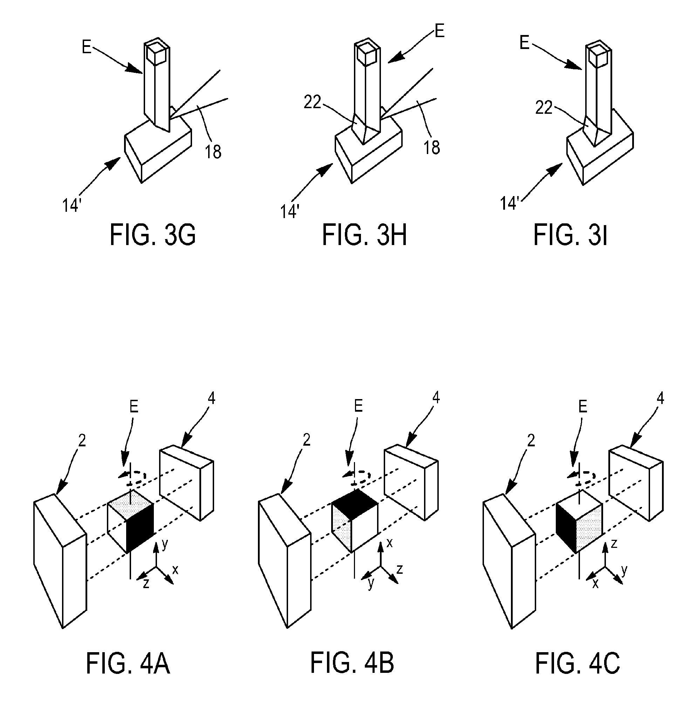

Le porte-échantillon comporte un support orientable 14 monté dans le logement circulaire 12. Comme on peut le voir sur les figures 2A à 2D, le support orientable 14 peut prendre plusieurs positions angulaires dans le logement circulaire 12. Dans l'exemple des figures 2A à 2D et 3A à 3I, le support orientable 14 est délimité par un bord en arc de cercle 14.1 et un bord droit 14.2, le rayon de l'arc de cercle 14.1 correspondant à celui du logement circulaire 12 de sorte à pouvoir faire pivoter le support orientable 14 dans le logement circulaire 12 autour de l'axe du logement circulaire 12. Dans l'exemple représenté, le support orientable 14 prend deux positions orientées à 90° l'une par rapport à l'autre (figure 2A et 2C). Dans l'exemple représenté, le support orientable comporte également au moins un élément 15 en saillie du bord droit 14.2 du support orientable 14. Sur la figure 2E, on peut voir une vue d'un autre exemple du support orientable 114 comportant un bord 114.1 muni de deux portions d'arc 114.3 appartenant au même arc de cercle et reliées par une portion droite 114.4, le guidage en rotation étant réalisé par les deux portions d'arc 114.3. Plusieurs éléments 115 sont en saillie et forment un support pour l'échantillon.

Sur la figure 2B, on peut voir une vue de détail du support orientable 14 et de l'échantillon E. L'échantillon E présente la forme d'une tige 16 comportant une zone d'intérêt 17 située à une extrémité longitudinale libre de la tige 16. La zone d'intérêt 17 mesure par exemple 100 nm de côté.

L'échantillon E est fixé sur le support orientable 14. Dans le cas de la tomographie électronique, il est fixé par apport de matière par FIB (Focused Ion Beam) comme cela sera décrit en détail ci-dessous. Par exemple, dans le cas de la tomographie X, un échantillon plus grand est fixé par FIB et est ensuite retaillé directement sur le support par FIB pour atteindre sa taille définitive. Dans le cas de la tomographie X, l'échantillon peut être fixé par dépôt de matière par FIB, de collage ou de toute fixation mécanique.

L'étape a) d'acquisition de projections du procédé a lieu comme suit:

Lors d'une sous-étape a1), l'échantillon E qui a été préalablement fixé sur le support orientable, est monté dans le support mobile 10 comme cela est représenté sur la figure 2A, de sorte à être aligné avec l'axe A-A'.

Le support mobile 14 est pivoté autour de l'axe A-A' et des projections sont enregistrées pour différents angles d'inclinaison compris entre -90° et 90° par exemple.

Lors d'une sous-étape a2), le support orientable 14 est pivoté de 90° autour de l'axe du logement circulaire de sorte que l'axe de la tige soit perpendiculaire à l'axe A-A' ou environ perpendiculaire à l'axe A-A' (figure 2C).

Le support mobile 14 est à nouveau pivoté autour de l'axe A-A' et des projections sont enregistrées pour différents angles d'inclinaison de manière similaire à la sous-étape a1).

Lors d'une étape a3), l'orientation de l'échantillon est modifiée afin de pouvoir réaliser des projections autour d'un troisième axe non coplanaire avec les deux premiers axes d'inclinaison (figure 2D). Par exemple, l'orientation de l'échantillon par rapport au support orientable 14 est modifiée. Pour cela, l'échantillon E est séparé du support orientable 14, est pivoté de 90° par rapport à celui-ci autour de l'axe de l'échantillon et est fixé sur un support orientable 14'. Sur la figure 2D, il s'agit d'un autre support orientable 14', on pourrait cependant réutiliser le même support orientable.

Il est à noter que les changements d'orientation de l'échantillon lors de sous-étapes a1), b1, c1) ne nécessitent par une grande précision, en effet lors du traitement ultérieur des projections, l'orientation précise des trois axes de pivotement est déterminée.

Il sera compris que la sous-étape a2) pourrait avoir lieu avant la sous-étape a1).

Nous allons décrire un exemple de modification de l'orientation qui a lieu lors de la sous-étape a3).

Les étapes de cette modification d'orientation sont représentées sur les figures 3A à 3I.

Par exemple, l'échantillon est disposé à l'intérieur d'un système à sonde ionique focalisée ou FIB (Focused Ion Beam). Un système FIB comporte une enceinte, une source émettant un faisceau ionique focalisée, un micromanipulateur, par exemple sous forme d'une aiguille fine, et des moyens pour effectuer un dépôt de matériau assisté par faisceau, ces moyens comprenant des injecteurs. Un système FIB comprend également un sous-système d'imagerie électronique (Microscope Electronique à Balayage) pour pouvoir visualiser l'échantillon en permanence.

L'échantillon fixé sur le support orientable 14 est tout d'abord disposé dans l'enceinte du système FIB.

Ensuite, le micromanipulateur 18 est fixé sur l'échantillon E par un dépôt d'un matériau au moyen des moyens de dépôt assisté par faisceau. L'extrémité libre du micromanipulateur est fixée par exemple à la base de la tige 16 du côté de la marche 15.

Ensuite, au moyen de la sonde ionique focalisé, l'échantillon E est découpé pour le séparer du support orientable 14 dans une zone 20 située entre la marche 15 et la zone de fixation au micromanipulateur 18. Ainsi, l'échantillon E peut être manipulé par le micromanipulateur 18.

L'échantillon E fixé à l'extrémité du micromanipulateur 18 est ensuite fixé sur un nouveau support orientable 14' en lui ayant préalablement appliqué une rotation de 90° par rapport à son orientation par rapport au support 14, comme cela est illustré en comparant les positions des supports orientables 14 et 14' sur les figures 3A et 3F.

L'échantillon E est ensuite fixé sur le support orientable 14' au moyen d'un apport de matériau 22 réalisé par les moyens de dépôt assisté par faisceau (figure 3H). Comme mentionné, ci-dessus, il n'est pas requis que le changement d'orientation soit précisément de 90°.

Le micromanipulateur 18 est ensuite séparé de l'échantillon E, au moyen de la sonde ionique focalisée (figure 3I).

L'échantillon E fixé sur le support orientable 14' et présentant une orientation modifiée de 90° par rapport à son orientation précédente est prêt à être mis en place dans le système de tomographie afin d'effectuer la troisième série de projections. Pour cela, le support orientable 14' est mis en place dans le logement circulaire dans la même position que le support orientable 14 lors de la sous-étape a2) comme cela est représenté sur la figure 2D. Le porte-échantillon 6 est pivoté autour de l'axe A-A' et des projections à différents angles d'inclinaison sont enregistrées de manière similaire aux étapes a1) et a2).

En variante, on pourrait utiliser comme porte-échantillon un porte-échantillon utilisé dans les microscopes électroniques à transmission qui pourrait permettre des inclinaisons autour d'au moins trois axes non coplanaires. Un tel porte-échantillon est décrit par exemple dans le document US7884326.

Sur les figures 4A à 4C, ont peut voir l'échantillon dans ses trois positions d'acquisition. Sur la figure 4A, l'acquisition se fait par inclinaison autour de l'axe y, sur la figure 4B, l'acquisition des projections se fait par inclinaison autour de l'axe x et sur la figure 4C l'acquisition se fait par inclinaison autour de l'axe z.

En variante, on peut prévoir que les différents angles d'inclinaison soient obtenus en déplaçant la source 2 et le détecteur 4 et que le changement d'axe d'inclinaison soit obtenu en déplaçant l'échantillon comme décrit ci-dessus.

Lorsque les trois séries de projections sont enregistrées, a lieu l'étape b) d'alignement.

L'étape b) comporte une sous-étape b1) d'alignement des projections à l'intérieur de chaque série puis, une sous-étape b2), d'alignement des séries entre elles.

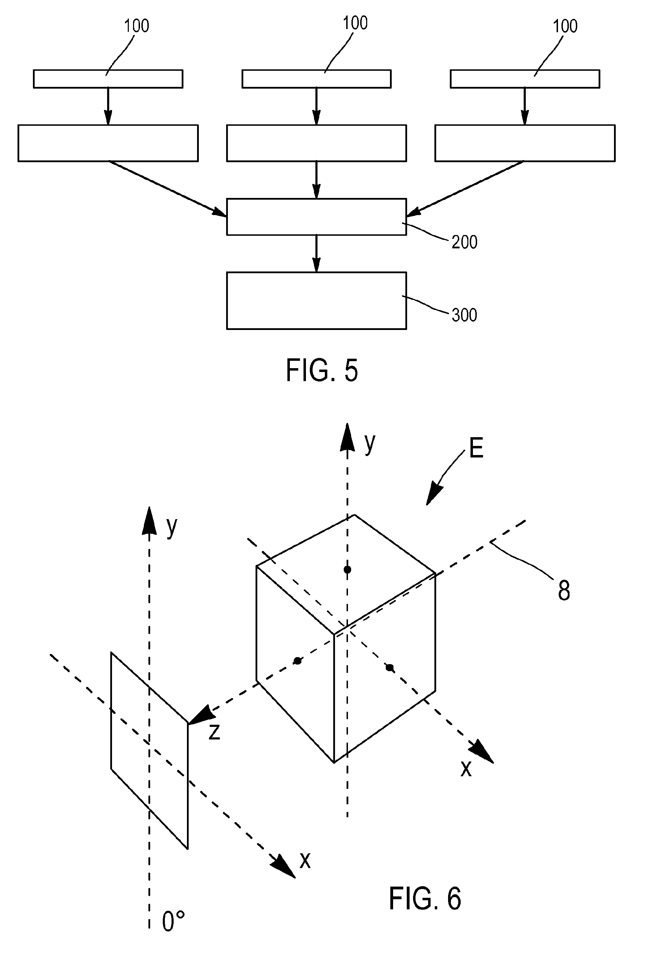

Sur la figure 5, on peut voir un organigramme des différentes sous-étapes de l'étape d'alignement b).

Lors de la sous-étape b1), on effectue tout d'abord, pour chaque série, une étape d'alignement désignée 100 pour compenser les décalages entre les images et pour trouver la position de l'axe d'inclinaison dans chaque projection. Les méthodes utilisées dans l'imagerie par tomographie utilisant un seul axe de rotation ou plusieurs axes coplanaires peuvent être utilisées, par exemple la méthode de corrélation croisée ou la méthode mettant en oeuvre des marqueurs bien connue de l'homme du métier.

A partir des données alignées, les reconstructions de chacune des série de projection sont calculées, cette étape est désignée 200, ce calcul est effectué par exemple avec la méthode de rétroprojection pondérée ou "weighted backprojection ".

On obtient alors des reconstructions préliminaires de chacune des séries.

Lors de la sous étape b2) désignée 300, on effectue un alignement des séries entre elles. Pour cela des paramètres sont calculés pour compenser la position des reconstructions des séries les unes par rapport aux autres. Pour cela, un système de coordonnées est défini dans chaque reconstruction préliminaire. Par exemple, l'axe d'inclinaison est l'axe y, la direction du faisceau 8 utilisé pour les projections pour un angle de pivotement de 0° définit l'axe z et l'origine du système de coordonnées est située sur l'axe d'inclinaison et au centre des projections à 0°, comme cela est schématisé sur la figure 6.

Afin de pouvoir aligner les trois séries de projections, des paramètres de transformation vers un système de coordonnées commun sont calculés en utilisant un procédé d'alignement. La transformation entre deux systèmes de coordonnées utilise six paramètres qui sont pour chaque axe des systèmes de coordonnées: le décalage le long de chaque axe et la rotation autour de chaque axe.

Par exemple, pour calculer ces paramètres, la méthode de corrélation croisée 3D entre les volumes reconstruits préliminaires peut être utilisée. Une telle méthode est decrite dans le document Messaoudi, N.G. de Loubresse, T. Boudier, P. Dupuis-Williams, S. Marco, Multiple-axis tomography: applications to basal bodies from Paramecium tetraurelia, Biology of the Cell, 98 (2006) 415-425.

La valeur maximale de la corrélation croisée correspond au meilleur alignement. En testant itérativement différentes valeurs de rotation, le meilleur alignement de rotation peut être trouvé.

Le décalage d'alignement peut être détecté par l'emplacement du maximum de la corrélation croisée.

Une autre méthode pour l'alignement des différentes séries consiste à utiliser la position de marqueurs ou " fiducial markers".

On peut envisager, pour l'étape d'alignement, de mettre en oeuvre dans une première phase la méthode de corrélation croisée et, dans un deuxième temps, la méthode de marqueurs pour affiner l'alignement.

Il peut être prévu de réduire la taille des projections pour effectuer les calculs d'alignement, ou les projections peuvent être filtrées par des méthodes de traitement d'image. La taille des volumes peut également être réduite ou ceux-ci peuvent être filtrés en utilisant des méthodes de traitement d'image. Les reconstructions préliminaires peuvent être réalisées en utilisant une taille réduite de projections. Les calculs d'alignement peuvent alors être accélérés.

D'autres procédés d'alignement pourraient combiner l'alignement de chacune des séries d'inclinaison et l'alignement des séries entre elles.

L'alignement pourrait être basé sur un alignement itératif, dans lequel les reconstructions seraient calculées pour des valeurs d'alignement et les projections des ces reconstructions seraient comparées aux projections originales.

En variante, il est possible de calculer des reconstructions pour plusieurs paramètres d'alignement et d'utiliser une mesure de qualité pour la reconstruction pour déterminer l'alignement correct.

Lorsque l'étape d'alignement b) est terminée, nous disposons des valeurs d'alignement pour chaque série (décalage, axe de rotation) et de données d'alignement pour effectuer la transformation entre les systèmes de coordonnées (étape 300).

Ensuite l'étape c) de reconstruction a lieu. Pour cela, sont utilisées les données d'alignement obtenues à l'étape b). Par exemple, cette étape utilise la méthode SIRT (simultaneous iterative reconstruction technique) ou technique de reconstruction itérative simultanée appliquée à plusieurs axes. Une telle méthode est par exemple décrite pour deux axes dans le document J. Tong, 1. Arslan, P. Midgley, A novel dual-axis iterative algorithm for electron tomography, Journal of Structural Biology, 153 (2006) 55-63].

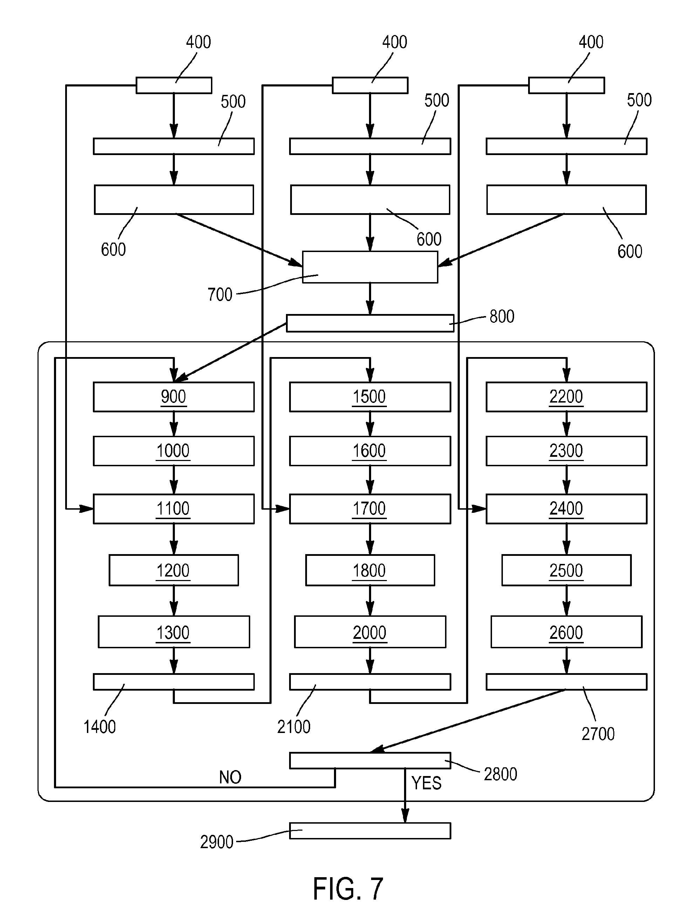

Sur la figure 7, on peut voir représenté un organigramme appliquant la méthode SIRT appliquée à au moins trois axes d'inclinaison, désigné SIRT multiaxe.

Lors d'une première sous-étape, on initialise les reconstructions. Cela peut être réalisé en initialisant les valeurs de tous les voxels à 0 ou 1.

Dans l'organigramme de la figure 7, l'initialisation est réalisée en utilisant une combinaison des rétroprojections de toutes les séries. Tout d'abord, une rétroprojection pour chaque série d'inclinaison est calculée (étape 400), ce qui donne une reconstruction préliminaire pour chaque série (étape 500).

Les reconstructions préliminaires sont ensuite transformées vers un système de coordonnées commun en utilisant les données d'alignement obtenues à la fin de l'étape b) (étape 600). Ces reconstructions sont ensuite combinées (étape 700). Cette combinaison peut être faite soit dans l'espace réel soit dans l'espace de Fourier. On obtient alors une reconstruction combiné initiale ou combinaison initiale (étape 800). La reconstruction est un volume.

On pourrait envisager d'arrêter la reconstruction à cette étape.

Les combinaisons des reconstructions individuelles dans l'espace réel peuvent former le résultat final.

Afin d'améliorer l'image obtenue, on commence les itérations de la méthode SIRT multiaxe.

Tout d'abord, le volume est transformé vers le système de coordonnées de la première série (étape 900).

Ensuite sont calculés les projections de la reconstruction temporaire, i.e. on calcule des projections de manière numérique (étape 1000). Ces projections "calculées" sont ensuite comparées aux projections acquises lors de l'étape a) (étape 1100).

La différence calculée entre les projections acquises et les projections calculées est ensuite rétroprojetées (étape 1200).

Lors d'une étape suivante 1300, on corrige la reconstruction temporaire de l'étape (1000) à partir de cette différence. On obtient alors une nouvelle reconstruction temporaire (étape 1400).

Cette reconstruction temporaire est ensuite transformée vers le système de coordonnées de la deuxième série (étape 1500) et les étapes 900 à 1400 sont répétées, celles-ci sont désignées 1600 à 2100.

On obtient une deuxième reconstruction temporaire (étape 2100), celle-ci est transformée vers le système de coordonnées de la troisième série (étape 2200) et les étapes 900 à 1400 sont répétées, celles-ci sont désignées 2300 à 2700.

On obtient alors une troisième reconstruction temporaire (étape 2700).

On vérifie ensuite si les critères sont remplis et si les itérations peuvent être interrompues (étape 2800). Si la réponse est positive YES la reconstruction est terminée, la troisième reconstruction temporaire est transformée vers le système de coordonnées de référence commun et on obtient le volume reconstruit final (2900). Si la réponse est négative NO, la troisième reconstruction temporaire est transformée vers le système de coordonnées de la première série (étape 900). Les critères peuvent être un nombre d'itérations donné ou la qualité de la reconstruction.

Pour calculer la différence dans la méthode SIRT, soit une soustraction soit une division peut être utilisée, la mise à jour des séries est alors obtenue soit de manière additionnelle soit de manière multiplicative respectivement.

Par ailleurs les rétroprojections peuvent être des rétroprojections simples, non filtrées, ou alors des rétroprojections pondérées.

Pour la reconstruction, on peut également envisager la reconstruction de Fourier directe, basée directement sur une transformé inverse de Fourier ou sur des versions de la transformé inverse de Fourier adaptées à la géométrie d'échantillonnage spécifique pour la tomographie.

En variante, d'autres méthodes de reconstruction comprenant des informations préalables sur l'objet, peuvent être utilisées en combinaison avec le procédé selon l'invention, telle que la tomographie discrète par exemple décrite dans le document K. J. Batenburg et al, 3D imaging of nanomaterials by discrete tomography, Ultramicroscopy 109 (2009), 730-740 ou des méthodes basées sur l'acquisition comprimé décrites dans le document Z. Saghi et al, Three-Dimensional Morphology of Iron Oxide nanoparticles with Reactive Concave Surfaces. A Compressed Sensing-Electron Tomography (CS-ET) Approach, Nano Letters 11 (2011), 4666-467.

Nous allons maintenant donner un exemple de reconstruction d'une structure zinc-blende, la reconstruction étant réalisée par simulation. La structure zinc-blende est réalisée en disposant aux emplacements des atomes des sphères ayant chacune une valeur de gris constante en utilisant différentes valeurs de gris et présentant des diamètres sensiblement différents pour les deux types. Ces sphères peuvent représenter deux différents types d'atome. Les mailles de taille 12x12x12 voxels sont réalisées, utilisant un diamètre de 3 voxels pour les atomes. La maille est reproduite le long des trois dimensions jusqu'à former un cristal contenant 30x30x30 mailles.

La structure zinc-blende est ensuite pivotée par des valeurs choisies arbitrairement autour des axes x, y, z pour éviter qu'un axe d'inclinaison coïncide avec une orientation cristallographique.

La structure zinc-blende est ensuite disposée dans un volume de 512×512×512 voxels avec un fond noir.

A partir de ce volume, des séries de projections sont simulées pour un procédé d'imagerie à trois axes orthogonaux selon la présente invention.

90 projections sont prises, celles-ci sont espacées angulairement de manière régulière sur un intervalle d'inclinaison de 180°C. On réalise donc 3 séries de 30 projections.

Dans le cas d'un procédé d'imagerie à un seul axe 90 projections devraient être prises et pour un procédé d'imagerie à deux axes, deux séries de 45 projections devraient être prises. Avantageusement, l'invention n'augmente pas le nombre de projections requis.

Pour le cas simulé aucun alignement n'est nécessaire, puisque le schéma d'acquisition est connu.

La reconstruction est réalisée avec la méthode SIRT telle que décrite ci-dessus.

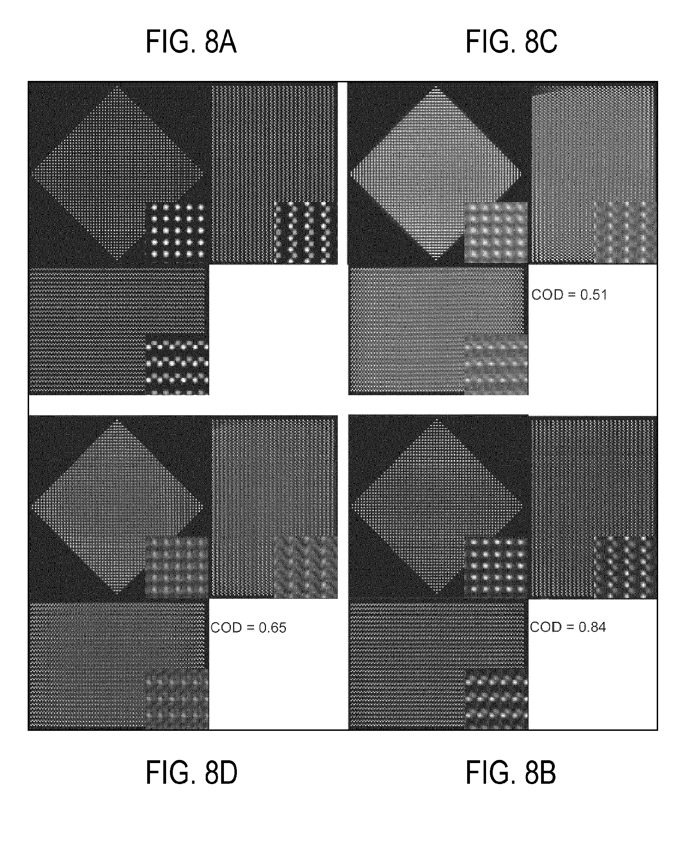

La figure 8A montre les données originales et la figure 8B montre la reconstruction obtenue grâce au procédé selon l'invention.

Sur les figures 8C et 8D, on peut voir à titre de comparaison des reconstructions obtenu avec un procédé à un axe et à deux axes.

On peut observer l'amélioration de la résolution obtenue grâce à l'invention (figure 8B) par rapport aux procédés de l'état de la technique.

Pour évaluer la qualité de reconstruction de manière numérique, le coefficient de détermination COD est calculé.

Ce coefficient est donné par:

$$COD = \frac{\left(\sum \left(\left(X_{i,j,k} - \overline{X}\right) * \left(Y_{i,j,k} - \overline{Y}\right)\right)\right)^2}{\sum \left(X_{i,j,k} - \overline{X}\right)^2 * \sum \left(Y_{i,j,k} - \overline{Y}\right)^2}$$

avec $X_{i,jk}$ la donnée de référence au niveau d'un voxel donné et $Y_{i,j,k}$ la donnée reconstruite au niveau du même voxel. Le COD obtenu grâce à la présente invention est de 0, 84 alors qu'il n'est que de 0,51 et 0,65 respectivement pour le procédé avec un seul axe d'inclinaison et à deux axes d'inclinaison.

On constate donc que, grâce au procédé selon l'invention, le coefficient de détermination est augmenté.

La présente invention ne se limite pas à l'acquisition du même nombre de projections autour de chaque axe de rotation. Le nombre de projections acquis pourrait varier d'un axe de rotation à l'autre.

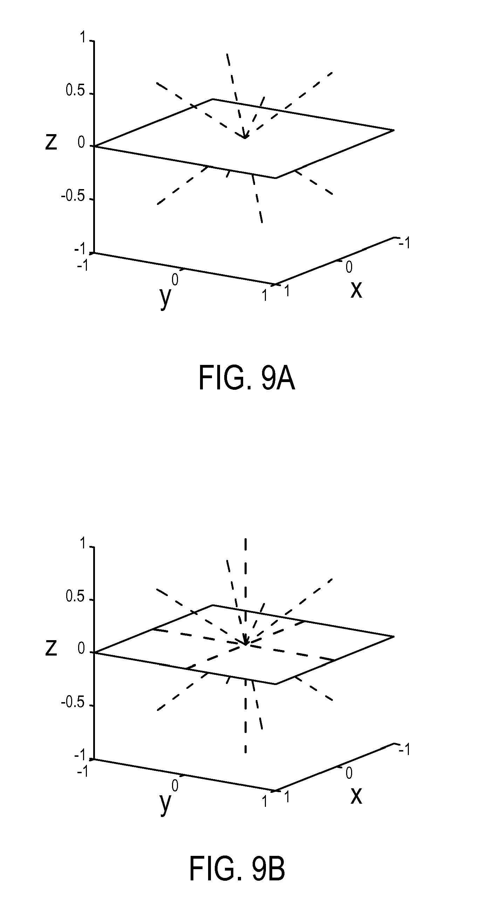

La présente invention ne se limite pas à l'acquisition de projections autour de trois axes non coplanaires ; un procédé dans lequel des projections seraient acquises autour de plus de trois axes non coplanaires ne sort pas du cadre de la présente invention. Sur la figure 9A, on peut voir représentés schématiquement quatre axes d'inclinaison non perpendiculaires pour réaliser quatre séries de projection selon le procédé d'imagerie selon l'invention et sur la figure 9B, on peut voir sept axes d'inclinaison respectivement pour réaliser sept séries de projection selon le procédé d'imagerie selon l'invention.

Le procédé d'imagerie selon l'invention peut être utilisé pour réaliser de la tomographie électronique ou de la tomographie X, dans ce dernier cas le nombre de projections peut être réduit tout en conservant la même qualité de reconstruction. Ceci est particulièrement avantageux pour les systèmes à rayons X de laboratoire, où la brillance de la source de rayons X est petite et par conséquent le temps d'acquisition des images est grand. Mais il présente également un intérêt pour des expériences utilisant un synchrotron, puisqu'il est possible de réduire le temps de faisceau nécessaire pour une expérience.

En fonction de la taille de l'objet étudié, les opérations qui peuvent être requises pour positionner l'objet de sorte à effectuer l'acquisition des projections autour des différents axes d'inclinaison dans un système à rayons X peuvent être réalisées manuellement sans recourir à un manipulateur ou par l'intermédiaire de petits manipulateurs.

Comme cela a été indiqué ci-dessus, on pourrait envisager de faire tourner l'ensemble source et détecteur par rapport à l'échantillon fixe, ceci peut présenter un intérêt pour réaliser des scanners de tomographie pour des applications médicales.

**Revendications**

1. Procédé de tomographie en trois dimensions d'un échantillon (E) mettant en oeuvre une source (2) émettant un faisceau de rayons X ou une source (2) émettant un faisceau d'électrons et au moins un détecteur (4), ledit procédé d'imagerie comportant les étapes :

   a) acquisition d'au moins trois séries de projections de l'échantillon (E) à différents angles d'inclinaison, chaque série de projections étant réalisée en modifiant l'angle d'inclinaison de l'échantillon par rapport à l'axe du faisceau autour d'un axe d'inclinaison (x, y, z) distinct de ceux des autres séries, les trois axes d'inclinaison étant non coplanaires,
   b) une étape d'alignement des projections,
   c) une étape de reconstruction.

**2.** Procédé de tomographie en trois dimensions selon la revendication 1, dans lequel les trois axes d'inclinaison (x, y, z) sont orthogonaux entre eux.

**3.** Procédé de tomographie en trois dimensions selon la revendication 1 ou 2, dans lequel l'étape b) d'alignement est réalisée par corrélation croisée et/ou en mettant en oeuvre des marqueurs.

**4.** Procédé de tomographie en trois dimensions selon l'une des revendications 1 à 3, dans lequel l'étape de reconstruction met en oeuvre une technique de reconstruction itérative simultanée.

**5.** Procédé de tomographie en trois dimensions selon l'une des revendications 1 à 4, dans lequel lors de l'étape a), l'échantillon (E) est déplacé par rapport au faisceau fixe.

**6.** Procédé de tomographie en trois dimensions selon la revendication 5, dans lequel l'échantillon est solidarisé à un support orientable (14, 14') par rapport à un porte-échantillon, ledit support orientable (14, 14') étant mis en rotation autour d'un axe orthogonal au faisceau au cours de l'étape a).

**7.** Procédé de tomographie en trois dimensions selon la revendication 6, dans lequel, afin de modifier au moins un axe d'inclinaison, l'orientation de l'échantillon (E) est modifiée par rapport au support orientable (14, 14').

**8.** Procédé de tomographie en trois dimensions selon la revendication 7, dans lequel la modification de l'orientation l'échantillon (E) par rapport au support orientable se fait par un système à sonde ionique focalisée.

**9.** Procédé de tomographie en trois dimensions selon la revendication 8, dans lequel :

 - un manipulateur(18) est solidarisé à l'échantillon (E) par apport de matière,
 - l'échantillon (E) est désolidarisé du support orientable (14) par découpe de l'échantillon (E) dans une zone (20) située entre le support orientable (14) et la zone de fixation au manipulateur (18) au moyen de la sonde ionique focalisée,
 - l'orientation de l'échantillon (E) est modifiée en manipulant le manipulateur (18),
 - l'échantillon (E) est solidarisé sur un support orientable (14') par rapport de matière,
 - le manipulateur est désolidarisé de l'échantillon (E).

FIG. 1

FIG. 2A

FIG. 2B

FIG. 2C

FIG. 2D

FIG. 2E

FIG. 3A

FIG. 3B    FIG. 3C    FIG. 3D    FIG. 3E

FIG. 3F

E

14'

18

**FIG. 3G**

E

22

14'

18

**FIG. 3H**

E

22

14'

**FIG. 3I**

2

E

4

y

z x

**FIG. 4A**

2

E

4

x

y z

**FIG. 4B**

2

E

4

z

x y

**FIG. 4C**

FIG. 5

FIG. 6

FIG. 7

FIG. 8A

FIG. 8C

FIG. 8D

FIG. 8B

FIG. 9A

FIG. 9B

Europäisches
Patentamt

European
Patent Office

Office européen
des brevets

**RAPPORT DE RECHERCHE EUROPEENNE**

Numéro de la demande

EP 14 15 5708

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | CÉDRIC MESSAOUDI ET AL: "Multiple-axis tomography: applications to basal bodies from Paramecium tetraurelia", BIOLOGY OF THE CELL, vol. 98, no. 7, 1 juillet 2006 (2006-07-01), pages 415-425, XP055081068, ISSN: 0248-4900, DOI: 10.1042/BC20050097 * abrégé * * Introduction * * page 418, colonne de gauche * * page 423 * ----- | 1-5 | INV. G06T11/00 |
| A | HATA S ET AL: "High-angle triple-axis specimen holder for three-dimensional diffraction contrast imaging in transmission electron microscopy", ULTRAMICROSCOPY, ELSEVIER, AMSTERDAM, NL, vol. 111, no. 8, 29 mars 2011 (2011-03-29), pages 1168-1175, XP028268492, ISSN: 0304-3991, DOI: 10.1016/J.ULTRAMIC.2011.03.021 [extrait le 2011-04-09] * le document en entier * ----- | 1-5 | |
| A | WO 2011/086475 A1 (KONINKL PHILIPS ELECTRONICS NV [NL]; FLORENT RAOUL [FR]; SCHOONENBERG) 21 juillet 2011 (2011-07-21) * le document en entier * ----- | 1-5 | **DOMAINES TECHNIQUES RECHERCHES (IPC)** G06T |

~~Le présent rapport a été établi pour toutes les revendications~~

| Lieu de la recherche | Date d'achèvement de la recherche | Examinateur |
|---|---|---|
| Munich | 22 juillet 2014 | Leclercq, Philippe |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

1-5

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION
FEUILLE SUPPLÉMENTAIRE B**

Numéro de la demande

EP 14 15 5708

La division de la recherche estime que la présente demande de brevet européen ne satisfait pas à l'exigence relative à l'unité d'invention et concerne plusieurs inventions ou pluralités d'inventions, à savoir :

    1. revendications: 1-5

        Procédé de tomographie électronique à trois axes non coplanaires.
               ---

    2. revendications: 6-9

        Support orientable permettant le positionnement d'un échantillon.
               ---

EPO FORM P0402

**EP 2 770 480 A1**

**ANNEXE AU RAPPORT DE RECHERCHE EUROPEENNE
RELATIF A LA DEMANDE DE BREVET EUROPEEN NO.**

EP 14 15 5708

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-07-2014

| Document brevet cité au rapport de recherche | Date de publication | Membre(s) de la famille de brevet(s) | Date de publication |
|---|---|---|---|
| WO 2011086475 A1 | 21-07-2011 | CN 102713976 A | 03-10-2012 |
| | | EP 2524351 A1 | 21-11-2012 |
| | | JP 2013517012 A | 16-05-2013 |
| | | RU 2012134436 A | 20-02-2014 |
| | | US 2013101196 A1 | 25-04-2013 |
| | | WO 2011086475 A1 | 21-07-2011 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7884326 B

**Littérature non-brevet citée dans la description**

- **C. MESSAOUDI ; N.G. DE LOUBRESSE ; T. BOUDIER ; P. DUPUIS-WILLIAMS ; S. MARCO.** Multiple-axis tomography: applications to basal bodies from Paramecium tetraurelia. *Biology of the Cell,* 2006, vol. 98, 415-425
- **MESSAOUDI, N.G. DE LOUBRESSE ; T. BOUDIER ; P. DUPUIS-WILLIAMS ; S. MARCO.** Multiple-axis tomography: applications to basal bodies from Paramecium tetraurelia. *Biology of the Cell,* 2006, vol. 98, 415-425
- **J. TONG ; 1. ARSLAN ; P. MIDGLEY.** A novel dual-axis iterative algorithm for electron tomography. *Journal of Structural Biology,* 2006, vol. 153, 55-63
- **K. J. BATENBURG et al.** 3D imaging of nanomaterials by discrete tomography. *Ultramicroscopy,* 2009, vol. 109, 730-740
- **Z. SAGHI et al.** Three-Dimensional Morphology of Iron Oxide nanoparticles with Reactive Concave Surfaces. A Compressed Sensing-Electron Tomography (CS-ET) Approach. *Nano Letters,* 2011, vol. 11, 4666-467